Europäisches Patentamt

(19) European Patent Office

Office européen des brevets

(11) Publication number: **0 076 693**
**B1**

(12) **EUROPEAN PATENT SPECIFICATION**

(45) Date of publication of patent specification: 26.03.86

(51) Int. Cl.⁴: **H 01 G 4/32**, H 01 G 1/013

(21) Application number: 82305290.7

(22) Date of filing: 05.10.82

(54) Wound foil type capacitors.

(30) Priority: 06.10.81 JP 158996/81

(43) Date of publication of application:
13.04.83 Bulletin 83/15

(45) Publication of the grant of the patent:
26.03.86 Bulletin 86/13

(84) Designated Contracting States:
DE FR GB IT

(56) References cited:
DE-A-2 246 422
FR-A-2 354 152
US-A-2 835 153
US-A-4 233 832

(73) Proprietor: FUJITSU LIMITED
1015, Kamikodanaka Nakahara-ku
Kawasaki-shi Kanagawa 211 (JP)

(72) Inventor: Endoh, Hiromi c/o FUJITSU LIMITED
Patent Department 1015 Kamikodanaka
Nakahara-ku Kawasaki-shi Kanagawa 211 (JP)
Inventor: Uraki Katsutoshi c/o FUJITSU
LIMITED
Patent Department 1015 Kamikodanaka
Nakahara-ku Kawasaki-shi Kanagawa 211 (JP)
Inventor: Miyamoto, Akira c/o FUJITSU
LIMITED
Patent Department 1015 Kamikodanaka
Nakahara-ku Kawasaki-shi Kanagawa 211 (JP)

(74) Representative: Sunderland, James Harry et al
HASELTINE LAKE & CO Hazlitt House 28
Southampton Buildings Chancery Lane
London WC2A 1AT (GB)

Courier Press, Leamington Spa, England.

**Description**

The present invention relates to wound foil type capacitors.

Capacitors of this type include paper capacitors, metallized paper capacitors, and plastic film capacitors.

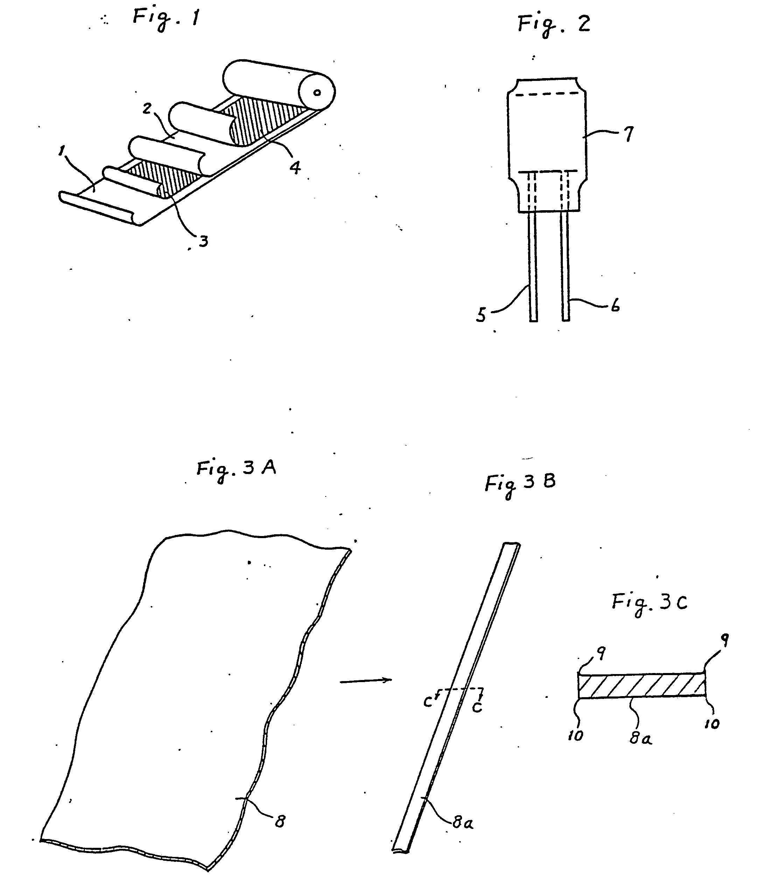

As illustrated by Fig. 1 of the accompanying drawings, which is a perspective view, a plastic film capacitor has in general been manufactured by the following processes. Two sheets of dielectric film 1 and 2 and two sheets of electrode film 3 and 4 are alternately layered one upon another and wound together by a winding machine. Then, after a lead terminals (not shown) have been fixed to the electrode films, the wound body is heated and baked.

Fig. 2 of the accompanying drawings is a plan view of the exterior of a plastic film capacitor thus manufactured, the wound body being indicated by reference numeral 7. In the illustrated capacitor, lead terminals 5 and 6 are lead out in one direction from the wound body 7.

In such capacitors, the dielectric films are in general plastics films, for example polystyrene, polyethylene-terephthalate or polypropylene films, whilst the electrode films are in general metal films, for example aluminium, copper or tin films.

The dielectric films have a thickness in the range from several μm to several tens of μm, depending on the rated voltage of the capacitor.

On the other hand, the thickness of the electrode films is not related to the static capacitance of the capacitor, so that if an electrode film is relatively thick this merely has the effect of increasing the volume of the capacitor and is very uneconomical from the point of view of material costs. Therefore, the electrode films must be as thin as possible and in general thickness is selected in the range from 6.5 μm to several tens of μm.

The static capacitance C of a wound foil type capacitor is given by the following equation.

$$C = 2\varepsilon S / 3.6\,\pi \cdot d \ (pF)$$

where

S: Overlapping area of the two electrode films (cm$^2$) of the capacitor.

d: Thickness of the dielectric films (cm)

ε: Dielectric constant of the dielectric films.

In general, plastic film capacitors can be provided with capacitances in the range from several tens of picoFarads to several tens of thousands of picoFarads. Such capacitors have various merits such as linear temperature characteristics, lesser dielectric absorption and dielectric strain and a small, allowable, variation of static capacitance, and are widely used in many electronic devices.

However, such capacitors also have demerits. Such capacitors of small capacitance values exhibit a large fluctuation of capacitance (that is actually achieved capacitance value will only be within a relatively broad range around the desired value) and are of high cost as compared with capacitors of large capacitance values, because a very narrow width electrode film is required for manufacturing a plastics film capacitor of 100 pF or less capacitance, for example a capacitor having a very small capacitance value in the range from several pF to several tens of pF.

Ordinarily, to obtain an electrode film, an ingot of aluminium, for example, is stretched and a metal film 8 of large area, as seen in Fig. 3A of the accompanying drawings, which is a perspective view, is obtained which has a width not related to the desired electrode width of a capacitor. Thereafter, this metal film 8 is subjected to a constant tension and is cut by a slitter whilst in an extended condition and thereby an electrode film 8a of desired electrode width is obtained, as illustrated in Fig. 3B of the accompanying drawings, which is also a perspective view.

Conventionally, however excellent the cutting ability of the slitter used, the cutting width of film is subject to restrictions arising from the mechanical strength of film itself. In particular, with a metal such as aluminium, the film is of great fragility and malleability and therefore with a film of a thickness of several tens of μm or less the minimum film width which can be produced by slitting is about 4 mm.

Fig. 3C of the accompanying drawings is a sectional view to an enlarged scale of a film 8a cut to a desired electrode width as explained above. As shown in Fig. 3C, burs 9 are easily formed when cutting the film 8 to a desired width to provide electrode film 8a, and edges 10 of the cut film are angled. Therefore, when a capacitor is manufactured using such a film 8a, burs 9 may pass through the dielectric film, resulting in a short-circuit or the edges 10 may pass the dielectric film making it thinner. As a result, dielectric breakdown may often occur.

This problem is also described in the document DE—A—22 464 22 which proposes to use a thicker dielectric at the burs.

Only with a metal film of a thickness of several tens of μm or more, is cutting to a film width of 4 mm or less possible, and with such a thickness the formation of burs in the cutting operation can be avoided because the mechanical strength of the film itself becomes large.

A winding machine is in general used for winding plastics film capacitors and it is usually to employ an automatic winder. When such an automatic winder is used a desired static capacitance for a capacitor, or a desired number of windings for a capacitor, are selected in advance and input to the winder. Then, plastics films and electrode films layered alternately are wound automatically until the desired static capacitance is achieved or the desired number of windings of a wound body is achieved.

When manufacturing a capacitor having a small capacitance of less than 100 pF, the required capacitance value may be obtained with only a few turns of the films (2 to 3 turns when the winding diameter is about 3 mm) when an ordinary electrode film of a width of 4 mm or more is used.

Therefore, the manufacturing yield of capacitors having a small capacitance allowance (having capacitance values within narrow limits) is extremely poor, and it has actually been impossible to manufacture capacitors of under 100 pF capacitance using an automatic winder. With existing plastic film capacitors, to manufacture such a capacitor of 100 pF or less capacitance, a worker has manually wound electrode film which has been cut to a width of 4 mm or more and to a required length, by inserting electrode film manually between dielectric films and by using a manual winder. The need for all these manufacturing steps means that the capacitors produced are expensive.

According to the present invention there is provided a wound foil type capacitor in which dielectric films and electrode films are alternately layered and wound, characterised in that at least one electrode film is obtained by deforming wire-form electrode material to provide the electrode film with a desired width.

The electrode film may be obtained by deforming a round wire material having a circular section of a diameter of 0.2 to 0.6 mm into a film of a thickness of 10 μm to 70 μm and a width of 4 mm or less.

Such electrode film may be used as an electrode film for a small capacitance capacitor of 100 pF or less.

Such electrode film may be subjected to an annealing process after said deformation process.

According to the present invention there is also provided a method of manufacturing a wound foil type capacitor consisting of sheets of dielectric film and electrode film layered and wound alternately, wherein at least one said electrode film is manufactured by deforming wire-form material to provide the electrode film with a desired width. This electrode film of aluminium or copper etc. is formed into a specified width dimension at the time of winding process, and a capacitor having a specified static capacitance is manufactured by winding said electrode film together with another electrode film and said dielectric films.

In such a method the electrode film can be taken up onto a reel, then wound using an automatic winding machine together with another electrode film and dielectric films, to thereby form a small capacitance capacitor of 100 pF or less.

The present invention can be applied for example to paper capacitors, metallized paper capacitors and plastics film capacitors. It is particularly advantageous when applied to plastic film capacitors.

An embodiment of the present invention can provide a highly reliable wound foil type capacitor which does not suffer to any substantial degree the disadvantages of previous such capacitors as described above, and in which short circuiting of electrode film and dielectric breakdown of dielectric film can be substantially avoided.

An embodiment of the present invention can provide economical and highly reliable plastic film capacitors having small capacitance values.

A wound foil type capacitor embodying this invention, and a method of manufacturing a wound foil type capacitor embodying this invention, provide a wound foil type film capacitor consisting of at least two sheets of dielectric film and electrode film, layered alternately, in which at least the one electrode film is obtained by deforming a wire-form body of a material such as aluminium or copper, for example, and forming it to a specified width dimension at the time of winding.

A wound foil type capacitor, embodying this invention, of a small capacitance value can be provided by setting the width dimension of the electrode film to 4 mm or less.

Reference is made, by way of example, to the accompanying drawings, in which:—

Fig. 1 is a perspective view for illustrating in general terms the manufacture of a plastic film capacitor by winding,

Fig. 2 is a plan view of the exterior of a plastic film capacitor after winding,

Figs. 3 are for assistance in explaining the formation of a conventional electrode film for a wound foil type capacitor: Fig. 3A is a perspective view of a metal film under a stretching condition; Fig. 3B is a perspective view of a conventional electrode film as cut to a specified width from the metal film of Fig. 3A; Fig. 3C is a sectional view, to an enlarged scale, taken along line C—C in Fig. 3B,

Figs. 4 are for assistance in explaining the formation of an electrode film of an embodiment of the present invention; Fig. 4A is a perspective view of a wire-form body of material; Fig. 4B is a perspective view of the body of Fig. 4A in a deformed condition; Fig. 4C is a sectional view, to an enlarged scale, taken along the line C—C in Fig. 4B.

Fig. 5 is a schematic diagram outlining a wire-body deformation process employed in an embodiment of the present invention,

Fig. 6 is a schematic illustration for assistance in explanation of a winding process used in the production of a plastic film capacitor embodying the present invention,

Figs. 7 are schematic illustrations for assistance in explanation of a winding process used in the production of another plastic film capacitor embodying the present invention; Fig. 7A is a side view; and Fig. 7B is a sectional view, and

Fig. 8 and Fig. 9 are respective plan views of completed plastic film capacitors embodying the present invention.

For a wound foil type capacitor embodying the present invention an electrode film 11 as shown in Fig. 4B is formed by deforming, involving spreading and/or compressing—flattening and spreading—a wire-form body 12, as shown in Fig.

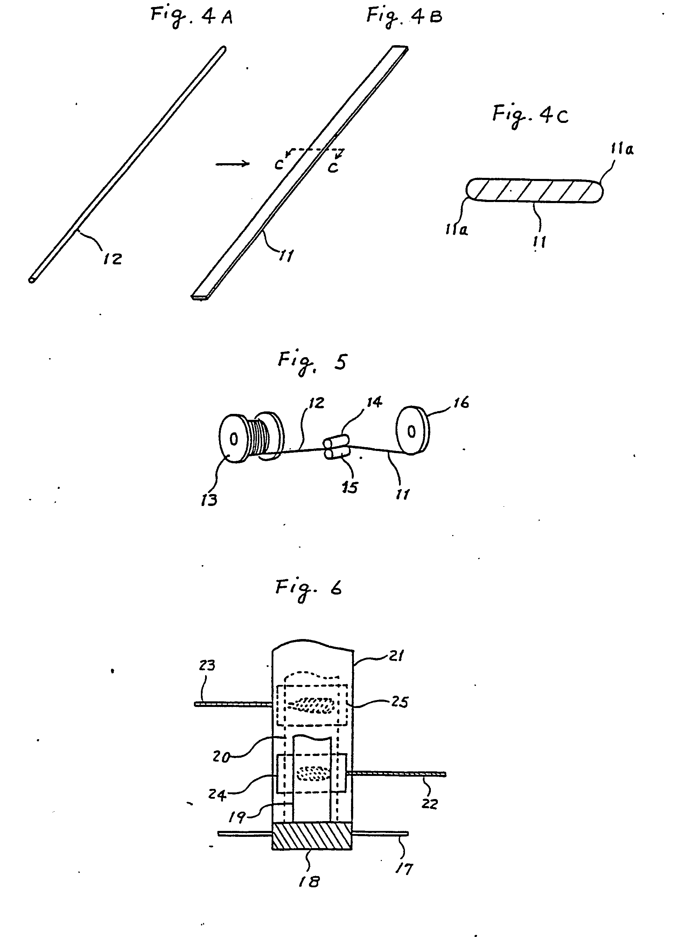

4A, of a material which is for example a light alloy or metal such as aluminium and which body has a circular section. Such a deforming process must be carried out in such a manner that the width dimension of electrode film 11 of Fig. B is equal to a required width dimension when the film is used in a capacitor. An electrode film 11 thus formed has rounded edges 11a as shown in the sectional view of Fig. 4C; no burs are formed and edges are not angled, which contrasts with the situation illustrated in Fig. 3C. For these reasons, when a plastic film capacitor is manufactured using electrode film 11, short-circuiting of the electrode film and dielectric breakdown of dielectric film are substantially absent and a highly reliable capacitor can be obtained.

By the manufacture of electrode films, as set forth in relation to Figs. 4, using wire-form material, it is possible in accordance with the present invention to obtain a very thin electrode film having a width of as little as 4 mm or less. Moreover, an automatic winding process can be used for forming a plastic film capacitor having a capacitance as small as 100 pF, or less, which has been difficult it not impossible previously.

The inventors of the present invention have carried out experiments, using wire-form material of various diameters, to demonstrate that electrode films of small width etc, as mentioned above can be provided by the present invention.

Table 1 contains data illustrating the relationship between thickness and width of deformed wire-form material, of various diameters, obtained from the inventors experiments. Aluminium wire material having a circular section was used in the experiments. In Table 1, film widths (mm) obtained from wire-form materials of diameters 0.2 mm to 0.6 mm by deforming into thicknesses of 10 μm to 70 μm are indicated.

TABLE 1

| Wire diameter (mm)→ Thickness (μm) ↓ | 0.2 | 0.3 | 0.4 | 0.5 | 0.6 |
|---|---|---|---|---|---|
| 10 | 3.0 | 5.7 | 8.9 | 12.5 | 16.4 |
| 20 | 1.5 | 2.8 | 4.5 | 6.3 | 8.2 |
| 30 | 1.0 | 1.9 | 3.0 | 4.2 | 5.3 |
| 40 | 0.7· | 1.4 | 2.3 | 3.2 | 4.2 |
| 50 | 0.6 | 1.1 | 1.8 | 2.5 | 3.3 |
| 60 | 0.5 | 0.9 | 1.5 | 2.1 | 2.7 |
| 70 | 0.4 | 0.8 | 1.3 | 1.8 | 2.3 |

From Table 1, it will be seen that, for example, an electrode film of a width of 3.0 mm can be formed by deforming an aluminium wire material of the diameter of 0.2 mm into a plate-form or tape-form thickness of 10 μm and that an electrode film of a width of 2.5 mm can be obtained by deforming wire material of a diameter of 0.5 mm into a plate-form or tape-form of a thickness of 50 μm.

When providing an electrode film of a width of 4 mm or less from aluminium wire material, the electrode film is relatively thick if the aluminium wire material diameter is 0.7 mm or more, and thereby a capacitor formed using such film would be large in size. This would be uneconomical also from the point of view of material cost.

If wire-form material of a diameter of 0.1 mm is used, the mechanical strength of electrode film may be insufficient and the film may easily be broken during winding.

Therefore it is desirable, to obtain an electrode film of a width of 4 mm, to use the material obtained by deforming wire-form material of a diameter of 0.2 mm to 0.6 mm into a plate-form or tape-form of a thickness of 10 μm to 70 μm.

Such desirable values of diameter and thickness apply also to copper wire and tin wire.

The wire-form material 12 is deformed (flattened and spread) as illustrated in Fig. 5, by taking it up onto a reel 16 through rollers 14 and 15 from a reel 13. The wire-form material 12 is changed into an electrode film 11 as shown in Fig. 4B when it is released from the rollers 14, 15. A very long electrode film in the form of tape can be formed very effectively by such a deforming method.

The electrode film 11 is subjected to an annealing process, lasting 30 to 60 minutes at a temperature of 300°C to 400°C, in order to eliminate process strains. This annealing makes the electrode film softer, improving the winding ability of the film.

For such annealing, if the reel 16 is formed of a heat resistant material, the reel 16 can be placed into a heating furnace for annealing the wound electrode film 11 and effective annealing can be executed.

The annealed material can be directly loaded into an automatic winding machine by using the reel 16 as an electrode film winding reel of such an automatic winding machine.

When manufacturing a plastic film capacitor of capacitance as small as 100 pF or less, an electrode film 11 in accordance with the present invention can be simply formed with a width dimension of 4 mm or less. Consequently, a very much longer film can be obtained and used than has been possible previously.

As a result, since in an embodiment of this invention a greater number of turns of electrode film can be provided and used than has previously been possible, a capacitor having lesser capacitance allowance can also be manufactured (the capacitor can be manufactured to a narrower tolerance) with good yield even when an automatic winding machine is used.

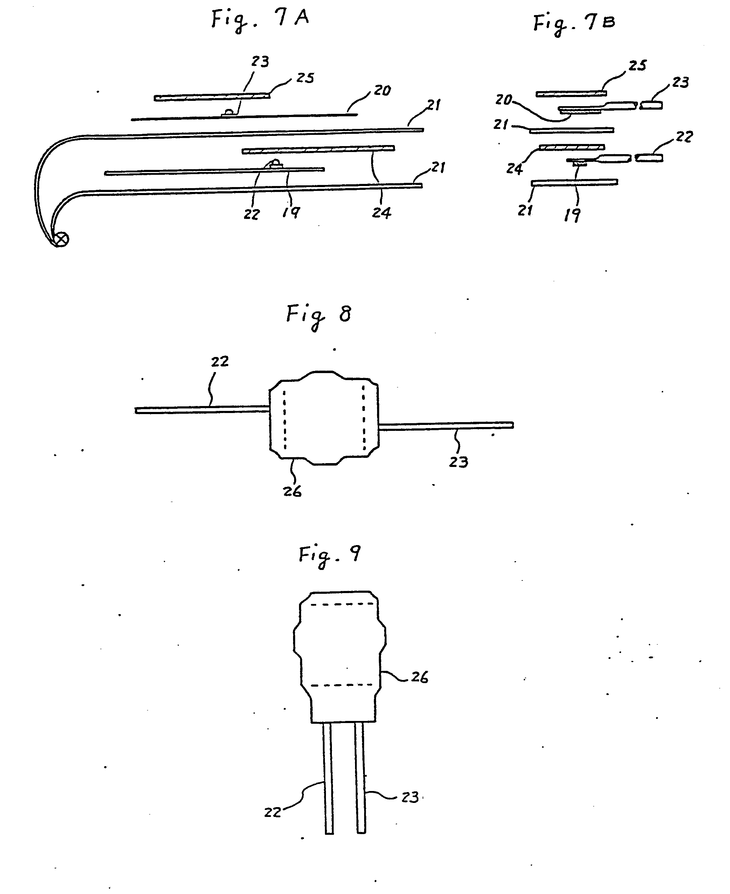

Fig. 6 illustrates a lead terminal mounting structure for the windings of a plastic capacitor embodying the present invention.

A wound body 18, formed on a winding shaft 17 by winding thereon two sheets of electrode films 19 and 20 and two sheets of dielectric film 21 (the one dielectric film sheet which lies above the electrode film 19 is not shown in Fig. 6, for reasons of clarity) alternately layered. The electrode film 19 is 4 mm or less in width and it is formed by deforming wire-form material as explained above. On the other hand, the electrode film 20 is 4 mm or more in the width and it is formed by cutting with a slitter as explained with reference to Fig. 3.

In the capacitor of Fig. 6 dielectric films of the same width are used, whilst one of the electrode films is narrower than the other. Thereby, a desired capacitance value can still be achieved almost exactly even if the relative positions of the electrode films deviate slightly in the width direction of the films. This means that a small capacitance plastic capacitor having a further reduced fluctuation of capacitance value (narrower tolerance) can be obtained, due to the combined effects of the use of different width electrode films and an increased number of windings.

Lead terminals 22, 23 of which ends or edges are manufactured so as to be flat are welded in suitable positions to the electrode films and then wound onto the wound body 18 by a winding operation.

Rectangular protection films 24 and 25, consisting of plastics film, are arranged in correspondence to the positions at which the lead terminals 22 and 23 are welded and are wound together with the films 19, 20 and 21.

The protection films 24, 25 function to provide more certain prevention of dielectric breakdown and short-circuiting.

The dielectric film 21 alone must be further wound, after the lead terminals 22 and 23 and the protection films 24 and 25 have been wound, in order to form an armouring or external protection portion. A wound body 18 thus formed is heated and baked after cutting away (unwanted parts of) films 19, 20, 21 and then used as a capacitor element.

Fig. 8 shows a small capacitance plastics film capacitor embodying the present invention provided by a wound structure as illustrated in Fig. 6. This capacitor has lead terminals 22 and 23 on opposite sides of the capacitance element 26 and the center of capacitance element 26 is formed with a projecting part as shown in Fig. 8, because the width of electrode film 19 is relatively narrow.

Fig. 7A and Fig. 7B illustrate a winding process used for manufacturing another type of small capacitance plastics film capacitor embodying this invention. The capacitor of Figs. 7A and 7B can be manufactured by the same winding process as that explained with reference to Fig. 6, except that the lead terminals 22 and 23 are lead out in the same direction. The flattened end parts of the lead terminals and the smaller width of electrode film sheet 19 can be seen clearly in Figs. 7A and 7B.

Fig. 9 illustrates a capacitor embodying the present invention having a winding structure as illustrated in Figs. 7A and 7B.

One example of the manufacture of such a capacitor as is shown in Fig. 8 is explained in more detail below.

Aluminium wire-form material of a diameter of 0.3 mm is formed into an electrode film 19 having the form of a tape of a thickness of 45 $\mu$m and a width of 1.3 mm by a deforming process as illustrated in Fig. 5 and this electrode film is wound onto the electrode film winding reel 16 of an automatic winding machine. An electrode film 20 in the form of tape of a thickness of 6.5 $\mu$m and a width of 6 mm is also wound onto a reel. Dielectric film 21 of a thickness of 40 $\mu$m and a width of 10 mm is wound onto another reel. A pair of such reels are prepared. All the reels are loaded into automatic winding machine and a small capacitance plastics film capacitor of the type shown in Fig. 8 is formed. Such a capacitor of 33 pF capacitance has been formed with up to 30 turns by automatic winding.

The inventors formed a number of such capacitors (30) and determined their capacitance distribution which was 32.7 pF to 34.6 pF with a reference deviation of 0.5 pF.

The capacitance distribution of a capacitor of 33 pF manufactured by a conventional manual winding process was 30.1 pF to 36.2 pF with a reference deviation of 1.7 pF.

As explained above, a capacitor embodying the present invention can be outstandingly better than a conventional capacitor in relation to fluctuation on variation of capacitance value.

The present invention provides a wound foil type capacitor which can be formed with a desired capacitance, in particular a capacitance of 100 pF or less, by using an electrode film which has been manufactured by deforming wire-form material of aluminium or copper etc. and formed to a desired width at the time of winding, and by winding such an electrode film together with dielectric film to provide a desired number of turns.

## Claims

1. A wound foil type capacitor, in which dielectric films and electrode films, alternately layered, are wound, characterised in that at least one electrode film of the capacitor is formed by deforming wire-form electrode material to provide the electrode film with a desired width.

2. A capacitor as claimed in claim 1, wherein the said at least one electrode film is obtained by deforming wire-form electrode material having a circular section of a diameter in the range 0.2 mm to 0.6 mm, the said at least one electrode film having a thickness in the range 10 µm to 70 µm and having a width of 4 mm or less.

3. A capacitor as claimed in claim 2, having a capacitance of 100 pF or less.

4. A capacitor as claimed in claim 1, 2 or 3, wherein the said at least one electrode film is annealed.

5. A capacitor as claimed in any preceding claim, being a plastic film capacitor, a paper capacitor or a metallized paper capacitor.

6. A capacitor as claimed in any preceding claim, wherein the said at least one electrode film is a rolled-flat film.

7. A capacitor as claimed in any preceding claim, wherein the wire-form electrode material is aluminium or copper or tin.

8. A capacitor as claimed in any preceding claim, having electrode films of respective different widths.

9. A method of manufacturing a wound foil type capcitor, in which dielectric films and electrode films, alternately layered, are wound, characterised by forming at least one electrode film of the capacitor by deforming wire-form electrode material to provide the electrode film with a desired width.

10. A capacitor as claimed in claim 9, wherein such deforming takes place at a time of or immediately prior to winding of the capacitor.

11. A method as claimed in claim 9 or 10, wherein the said at least one electrode film is subjected to annealing after the deforming.

12. A method as claimed in claim 9, 10 or 11, wherein the said at least one electrode film, after the deforming, is taken up onto a reel for use in an automatic winding machine.

13. A method as claimed in claim 9, 10, 11 or 12, comprising passing the said wire-form electrode material between rollers to flatten and spread that material to the desired width to provide the said at least one electrode film.

## Patentansprüche

1. Folien-Wickelkondensator bei welchem dielektrische Filme und Elektrodenfilme, abwechselnd geschichtet, gewickelt sind, dadurch gekennzeichnet, daß wenigstens ein Elektrodenfilm des Kondensators durch Deformierung eines drahtförmigen Elektrodenmaterials gebildet ist, um den Elektrodenfilm mit einer gewünschten Breite vorzusehen.

2. Kondensator nach Anspruch 1, bei welchem wenigstens ein Eletrodenfilm durch Deformierung eines drahtförmigen Elektrodenmaterials erhalten wird, welches einen kreisförmigen Querschnitt von einem Durchmesser im Bereich von 0,2 bis 0,6 mm hat, wobei der genannte wenigstens eine Elektrodenfilm eine Dicke im Bereich zwischen 10 um bis 70 um und eine Breite von 4 mm oder weniger hat.

3. Kondensator nach Anspruch 2, mit einer Kapazität von 100 pF oder weniger.

4. Kondensator nach Anspruch 1, 2 oder 3, bei welchem der genannte wenigstens eine Elektrodenfilm getempert ist.

5. Kondensator nach einem der vorhergehenden Ansprüche, der ein Kunststoffilmkondensator, ein Papierkondensator oder ein Kondensator mit metallisiertem Papier ist.

6. Kondensator nach einem der vorhergehenden Ansprüche, bei welchem der genannte wenigstens eine Elektrodenfilm ein flachgerollter Film ist.

7. Kondensator nach einem der vorhergehenden Ansprüche, bei welchem das drahtförmige Elektrodenmaterial Aluminium oder Kupfer oder Zinn ist.

8. Kondensator nach einem der vorhergehenden Ansprüche, mit Elektrodenfilmen von jeweils unterschiedlichen Breiten.

9. Verfahren zur Herstellung eines Folien-Wickel-kondensators, bei welchem dielektrische Filme und Elektrodenfilme, abwechselnd geschichtet, gewickelt werden, gekennzeichnet durch Bildung von wenigstens einem Elektrodenfilm auf dem Kondensator durch Deformierung drahtförmigen Elektrodenmaterials, um den Elektrodenfilm mit einer gewünschten Breite vorzusehen.

10. Kondensator nach Anspruch 9, bei welchem solch eine Deformierung zu einer Zeit während oder unmittelbar vor der Wicklung des Kondensators stattfindet.

11. Verfahren nach Anspruch 9 oder 10, bei welchem der genannte wenigstens eine Elektrodenfilm nach der Deformierung einer Temperung unterworfen wird.

12. Verfahren nach Anspruch 9, 10 oder 11, bei welchem der genannte wenigstens eine Elektrodenfilm, nach der Deformierung, für die Verwendung in einer automatischen Wickelmaschine auf eine Rolle aufgewickelt wird.

13. Verfahren nach Anspruch 9, 10, 11 oder 12, bei welchem das genannte drahtförmige Elektrodenmaterial zwischen zwei Walzen hindurchgeführt wird, um das Material abzuflachen und auf die gewünschte Breite auszubreiten, um den genannten wenigstens einen Elektrodenfilm vorzusehen.

## Revendications

1. Condensateur du type à feuilles enroulées, dans lequel des pellicules diélectriques et des pellicules d'électrode, en couches alternées, sont enroulées, caractérisé en ce qu'au moins une pellicule d'électrode du condensateur est formée par déformation d'un matériau d'électrode en forme de fil de façon à produire une pellicule d'électrode ayant un largeur voulue.

2. Condensateur selon la revendication 1, oú la ou les pellicules d'électrode sont obtenues par déformation d'un matériau d'électrode en forme de fil ayant une section circulaire d'un diamètre comprise entre 0,2 et 0,6 mm, la ou les pellicules d'électrode ayant une épaisseur compris entre 10 µm et 70 µm et possédant une largeur de 4 mm ou moins.

3. Condensateur selon la revendication 2, possédant une capacité de 100 pF ou moins.

4. Condensateur selon la revendication 1, 2 ou 3, où la ou les pellicules d'électrode sont recuites.

5. Condensateur selon l'une quelconque des revendications précédentes, qui est un condensateur en pellicules de matière plastique, un condensateur en papier ou un condensateur en papier métallisé.

6. Condensateur selon l'une quelconque des revendications précédentes, où ladite pellicule d'électrode est une pellicule aplatie entre des cylindres.

7. Condensateur selon l'une quelconque des revendications précédentes, où le matériau d'électrode en forme de fil est l'aluminium, le cuivre ou l'étain.

8. Condensateur selon l'une quelconque des revendications précédentes, possédant des pellicules d'électrode de largeurs respectivement différentes.

9. Procédé de fabrication d'un condensateur du type à feuilles enroulées, dans lequel en enroule des pellicules diélectriques et des pellicules d'électrode en couches alternées, caractérisé en ce qu'on forme au moins une pellicule d'électrode du condensateur en déformant un matériau d'électrode en forme de fil de manière à produire la pellicule d'électrode ayant une largeur voulue.

10. Condensateur selon la revendication 9, où cette déformation a lieu au moment de l'enroulement du condensateur ou en un moment immédiatement précédent.

11. Procédé selon la revendication 9 ou 10, où on soumet la ou les pellicules d'électrode à un recuit après la déformation.

12. Procédé selon la revendication 9, 10 ou 11, où on enroule ladite pellicule d'électrode, après la déformation, sur une bobine pour l'utiliser dans une machine d'enroulement automatique.

13. Procédé selon la revendication 9, 10, 11 ou 12, comprenant l'opération qui consiste à faire passer ledit matériau d'électrode en forme de fil entre des cylindres afin d'aplatir et d'étaler ce matériau jusqu'à la largeur voulue pour produire ladite pellicule d'électrode.

Fig. 1

Fig. 2

Fig. 3 A

Fig 3 B

Fig. 3 C

Fig. 4 A

Fig. 4 B

Fig. 4 C

Fig. 5

Fig. 6

2

Fig. 7A

Fig. 7B

Fig. 8

Fig. 9

3